Europäisches Patentamt

European Patent Office

Office européen des brevets

(19)

(11) Publication number: **0 222 346 B1**

(12) **EUROPEAN PATENT SPECIFICATION**

(45) Date of publication of patent specification: **04.09.91**

(51) Int. Cl.5: **G01N 29/00**, G01N 29/04, G01H 9/00

(21) Application number: **86115467.2**

(22) Date of filing: **07.11.86**

(54) Method of measuring a sound pressure distribution in a solid body due to a ultrasonic probe by using photoelasticity.

(30) Priority: **09.11.85 JP 251804/85**

(43) Date of publication of application:
**20.05.87 Bulletin 87/21**

(45) Publication of the grant of the patent:
**04.09.91 Bulletin 91/36**

(84) Designated Contracting States:
**DE FR GB**

(56) References cited:

JOURNAL OF NONDESTRUCTIVE EVALUA-TION, vol. 4, no. 2, June 1984, pages 65-73, New York, US; C.F. YING et al.: "Scattering of ultrasound in solids as visualized by the photoelastic technique"

ULTRASONICS, vol. 17, no. 5, September 1979, pages 209-212, Guildford, Surrey, UK; J.A. ARCHER-HALL et al.: "The photoelastic visualization of ultrasonic waves in liquids"

(73) Proprietor: **KRAUTKRAMER FOERSTER JAPAN CO., LTD.**
**2-10-12, Dogenzaka Shibuya-ku**
**Tokyo(JP)**

Proprietor: **Date, Kazuhiro**
**1-4-5-911, Nishikicho**
**Sendai-shi Miyagi-ken(JP)**

Proprietor: **Shimada, Heihachi**
**20, Tsutsujigaoka**
**Sendai-shi Miyagi-ken(JP)**

(72) Inventor: **Date, Kazuhiro**
**1-4-5-911, Nishikicho**
**Sendai-shi Miyagi-ken(JP)**
Inventor: **Shimada, Heihachi**
**20, Tsutsujigaoka**
**Sendai-shi Miyagi-ken(JP)**

(74) Representative: **Schaumburg, Thoenes & En-glaender**
**Mauerkircherstrasse 31 Postfach 86 07 48**
**W-8000 München 86(DE)**

JAPANESE JOURNAL OF APPLIED PHYSICS, SUPPLEMENTS, vol. 22, supplements 22-23, 1984, pages 19-21, Tokyo, JP; K. NEGISHI et al.: "Visualization of ultrasonic pulse in glass by the technique of photoelasticity"

MESURES REGULATION AUTOMATISME, vol. 45, no. 6-7, June-July 1980, pages 27-29, Paris, FR; "Visualisation d'images acoustiques par cristal liquide"

D1 = CHINESE JOURNAL OF ACCOUSTICS, vol. 2, 1983, pages 97-106; Zhang Shouyu et al.: "QUANTITATIVE MEASUREMENT OF THE ULTRASONIC STRESSES IN A TRANSPARENT SOLID BY THE PHOTOELASTIC METHOD"

**Description**

The present invention refers to a method according to the first part of the claim.

A non-destructive test for detecting defects in a material is inevitably necessary for the objects required of high safety and reliability such as atomic power and stream power equipments, airplanes, automobiles, chemical plant and machines; iron frame constructions such as buildings and bridges; and ceramic members.

An ultrasonic flaw detection method is a non-destructive test for detecting defect in material in such a manner that an ultrasonic pulse (hereinafter referred to simply as pulse) is emitted from an ultrasonic probe (hereinafter referred to simply as probe), and the pulse reflected from a defect is detected by the probe thereby to detect the defect in the material. The ultrasonic flaw detection is most generally used for the objects as mentioned above.

The probe used for the method uses generally ceramics as piezoelectric transducer and has deviations in characteristics of the probe from a reason of manufacturing thereof, and further is frequently exchanged as consumption goods. On the other hand, it is necessary for insuring a quantitative analysis characteristic of the detection results obtained by using the probe, a judgement for a defect detection mostly important in actual, and a uniformity that the same results for the same defect are obtained by using any one of the probes, to determine a tolerance of the sound pressure distribution of the pulse emitted from each probe. Furthermore, it is necessary for avoiding a fail to detect the defect in an actual flaw detection, to determine a suitable selection of the probe, an arrangement and a scanning pitch of the probe. To this end, a pulse waveform emitted from the probe, a sound pressure distribution on the waveform, and their changes in the travelling process are the most important factors for such determination.

As a measuring technique relating to the pulse waveform and the sound pressure distribution of the pulse emitted from the probe, there are three kinds of methods, one of them is the method of visually measuring and evaluating the pulse actually emitted from the probe into the model similar to the material to be used actually, as is similar to the photoelasticity and the schlieren methods, one of them is a method using a standard test piece having minute reflectors in lateral and vertical holes and using the actual material to be measured, and the remaining method is a method receiving the pulse emitted from the probe by using an electro-dynamic sensor.

In the above method using the standard test piece or the electro-dynamic sensor, the sound pressure distribution is consequently evaluated taking account of the characteristics of the probe for receiving the pulse and the electro-dynamic sensor, therefore only the relative sound pressure distribution can be measured and an information concerning the absolute value of the pulse waveform and the sound pressure can not be obtained. Furthermore, there are disadvantages that the frequency characteristic of the reflection due to the minute reflection body in the standard test piece is very particular, and the reflection waveform is undesirably deviated in accordance with the input waveform.

It is assumed that it is effective that the method visually evaluating the pulse has a possibility of measuring the pulse waveform and the sound pressure on the waveform. However, since there is not provided by the schlieren method the visual image proportional to the sound pressure because of its principle, a quantitative measuring is difficult. In contrast, according to the photoelastic method a principal stress difference can be measured, therefore the sound pressure of the ultrasonic pulse can be measured directly.

According to the conventional photoelastic method for effecting a visual measuring of the pulse, there are two kinds of methods using a linear polariscope and circular polariscope, in which a stroboscopic light source having a short flushing time is used for obtaining a still picture of the pulse travelling with high speed. In the case of the method using the linear polariscope, a high sensitivity sufficient for obtaining a visual image of the pulse can be obtained, but the visual image is undesirably changed in accordance with the direction of the incident polarized light used, because of the linear polarization, therefore a quantitative measurement can not be obtained. On the other hand, in the case of the method using the circular polariscope, a visual image proportional to a principal stress difference can be obtained in principle, therefore the quantitative measurement of the pulse waveform and the sound pressure distribution can be obtained. In this case, however, a detailed quantitative measuring can not be achieved because of low sensitivity for making visual the pulse generated by the conventional ultrasonic flaw detecting apparatus and its probe. Therefore, development of a method for obtaining a visual image of the pulse with high sensitivity by using the photoelastic method has been expected.

The CHINESE JOURNAL OF ACOUSTICS, Vol. 2, No. 2, 1983, pages 97 through 106, Zhang Shouyu et al, discloses a method according to the first part of the claim. The arrangement for realizing this method comprises a λ/4-plate. Additional to the features mentioned in the first part of the claim, the method according to this article comprises the following steps:

1. A point (position) for measuring the sound pressure is determined. (for example, the position where the sound pressure appears to have maximum value).

2. While holding the polarizer and analyzer crossed, both are rotated appropriately to find the angle of rotation in which the brightness at the measuring point becomes lowest.

3. From the position of such angle of rotation, both are rotated for 45° while holding both crossed.

4. λ/4-plate is provided in front of the analyzer. The major axis direction of $\frac{1}{4}$ wavelength is made to be identical to the direction of the analyzer which is arranged in the above item 3).

5. In this state, only the analyzer is rotated to find the angle of rotation in which the brightness at the measuring point becomes lowest.

6. The sound pressure at the measuring point is found by the angle by which the analyzer is rotated in the above item 5).

The sound pressure in this method is found by evaluating an angle of rotation which was found by rotating a polarizing plate. With this method, only one point of the sound pressure distribution may be found by one measuring cycle.

An object of the present invention is to develop a photoelastic method with high sensitivity capable of the resolution of the sound pressure distribution, as is similar to the photoelastic method using the circular polariscope.

This object is resolved by a method according to the single claim.

By this, it is possible to make visual the pulse generated by the combination of the conventional ultrasonic flaw detector and the probe, to measure the pulse waveform and the sound pressure distribution on the waveform from the visual image, and then to evaluate and authorize the characteristics concerning the sound of pressure of the probe.

Therefore, the present invention relates to a quantitatively measuring method of the pulse waveform and the sound pressure distribution on the waveform emitted from a probe into a transparent solid model or test piece. By using the photoelastic method, it becomes possible to evaluate the characteristics concerning the sound pressure distribution of the used probe, by forming a transparent solid model with the material having a similar characteristic as the actually tested material. On the basis of this, the present invention is effectively utilized to the selection of the probe suitable for a defect in material, the arrangement of the probe, the determination of a scanning pitch, and a development of a new probe, thereby improving the reliability and the precision of the ultrasonic flaw detection.

Furthermore, since an ultrasonic pulse is a minute stress wave, the method of the present invention relates to a minute stress measuring technique extremely higher than the conventional photoelastic stress measuring technique, therefore the present method can be utilized for a static minute stress measurement and a dynamic minute stress measurement of repeat phenomenon.

Fig. 1 is a view for explaining the constitution of an apparatus for making visual the ultrasonic pulse generated by the combination of the photoelastic apparatus of the linear polarization type and the stroboscopic light source,

Fig. 2 is a view for explaining the brightness at voluntary points when the same stress field is observed at the linearly polarized lights different from each other in the principal axis by 45°,

Fig. 3 is a flowchart showing the method of the present invention, in which the process from the synthesized picture to the sound pressure distribution measurement is shown,

Fig. 4 is a front view showing a calibrating apparatus for the sound pressure,

Fig. 5 is a graph showing the calibration curve showing the relationship between the brightness of the negative film obtained from synthesized picture and the stress, and

Figs. 6 to 9 are graphs showing the sound pressure distribution of the probe obtained by the method of the present invention.

DETAILED DESCRIPTION OF THE INVENTION

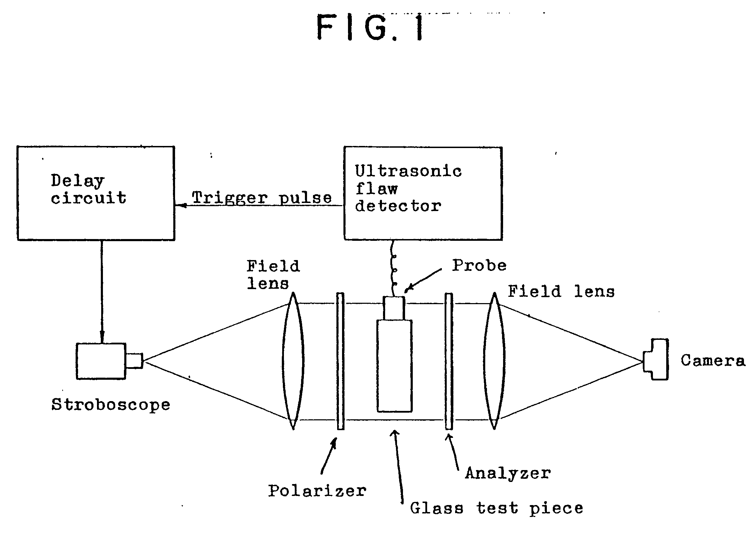

As mentioned in Fig. 1, the pulse generated by the conventional ultrasonic flaw detector is emitted from the conventional probe into a transparent test piece of glass, as is similar to the conventional flaw detection. On the other hand, a trigger pulse is fetched from the ultrasonic flaw detector in synchronism with the pulse emitted into the test piece of glass to apply it to a delay circuit for providing a delay time and further to actuate a stroboscope. The reason why glass is used as a test piece is that the ultrasonic wave velocity of glass is similar to that of the steel material tested most frequently. It the photoelastic apparatus of the linearly polarized light type is combined with the test piece of glass, the pulse can be visually observed since the pulse in the glass test piece is a stress wave. The visual image obtained by the apparatus shown in Fig. 1 is the conventional visual image of the linear polarization, therefore the quantitative analysis can not be achieved.

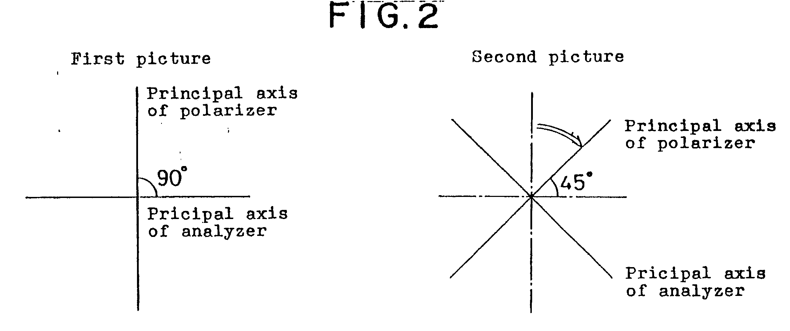

As shown in Fig. 2, there are shown two pictures of linear polarization in which the principal axis of the polarizer is always perpendicular to the principal axis of analyzer and each principal axis in the first picture is 45° different from each principal axis in the second picture. If the polarized light have been passed through the same stress field, the following equation is obtained in the case of the first picture.

$$I_1 = a^2 \cdot \sin^2 2\theta \cdot \sin^2 \tfrac{\delta}{2} \qquad (1)$$

where, $I_1$ is brightness at voluntary points on the first picture; a, a constant; $\theta$, an angle between the principal axis and the principal stress direction of the stress field; $\delta$, the following equation;

$$\delta = C \cdot d \cdot (\sigma_1 - \sigma_2) \qquad (2)$$

C, a photoelastic constant; d, the thickness of the test piece; and $\sigma_1$ and $\sigma_2$, principal stress.

On the other hand, in the case of the second picture the following equation is obtained.

$$I_2 = a^2 \cdot \cos^2 2\theta \cdot \sin^2 \tfrac{\delta}{2} \qquad (3)$$

Where, $I_2$ is brightness at the voluntary points on the second picture; a, $\theta$ and $\delta$ are the same as that mentioned on the equation (1); and especially $\theta$ is the value on the first picture.

In the case of the synthesized picture in which the brightness of the first picture is added to that of the second picture, the brightness at the voluntary points on the synthesized picture is represented as follows.

$$I = I_1 + I_2 = a^2 \cdot \sin^2 \tfrac{\delta}{2} \qquad (4)$$

Referring to the equation (2), the brightness at the voluntary points on the synthesized picture corresponds to only the principal stress difference, and the relationship between the brightness and the stress value is the same as the case of the circular polarization. The brightness corresponds to the principal stress difference as mentioned above, but since the relation between the principal stress components of longitudinal wave and shear wave are known in the case of ultrasonic pulse, the sound pressure can be measured and evaluated at the voluntary points by measuring the brightness of the synthesized picture by using the equation (4).

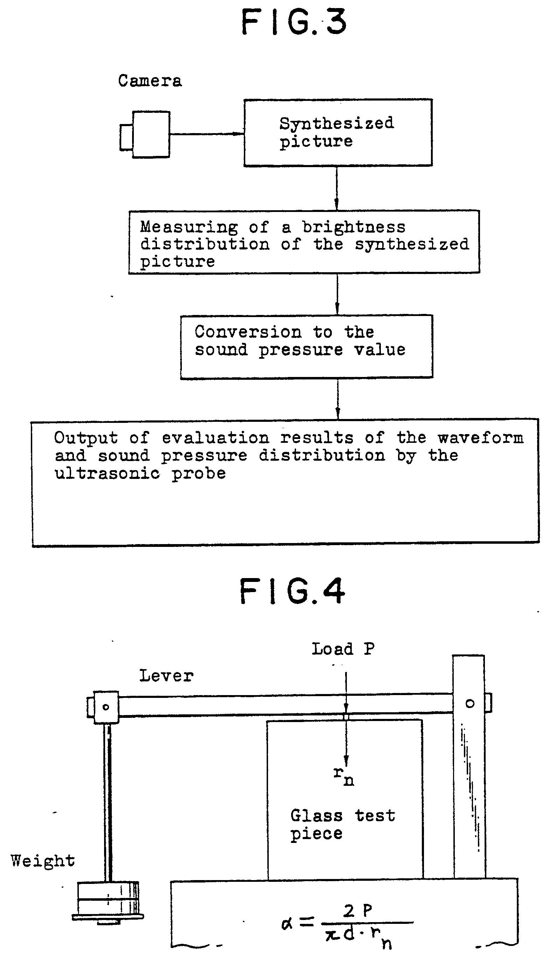

Referring to Fig. 3 the flow of such measurement is shown.

There are shown examples for measuring the sound pressure distribution of an ultrasonic pulse generated from a normal longitudinal wave probe and a angle shear wave probe. The visual image obtained by the circular pclariscope is also shown by reference photographs.

Such measurement is obtained by the apparatus shown in Fig. 1, the ultrasonic flaw detecting apparatus and the probe are available in markets. The frequency of the probe is 2 MHz, and the dimension of the probe has a diameter of 20 mm for the longitudinal wave and 22 X 22 mm for the shear wave. Pyrex glass having the dimension 100 X 100 mm of square and thickness of 20 mm was used as the glass test piece. This pyrex glass has the wave speed of 5490 m/sec for longitudinal wave and 3420 m/sec for shear wave which are similar to that of steel material, and further has high sensitivity of photoelasticity, therefore the pyrex glass sufficiently simulates actual test material for the ultrasonic flaw detection test. There was used a stroboscope having flushing time of 150 ns.

The synthesization of pictures was effected by a conventional 35 mm camera, namely the first and the second pictures are double exposed on the same film frame. The longitudinal wave of the synthesized picture thus obtained is shown in reference photograph 1 (attached with reference photographs 1 to 4) and the shear wave thereof is shown in the reference photograph 2. Since a print paper has a limitation in contrast characteristic, it is not possible to express the images of the film on a single print paper, therefore two images having densities different from each other are used for the purpose of showing the detail. As is apparent from the above, according to the method of the present invention the ultrasonic pulse can be visually observed very clearly. The reference photographs 3 and 4 show photographs recorded with the same image by the circular polarization. As is apparent from the photographs 3 and 4 in comparison with the photographs 1 and 2, according to the visual image by the circular polarization, they are at most recognized as the pulse and it is not possible to achieve the quantitative evaluation.

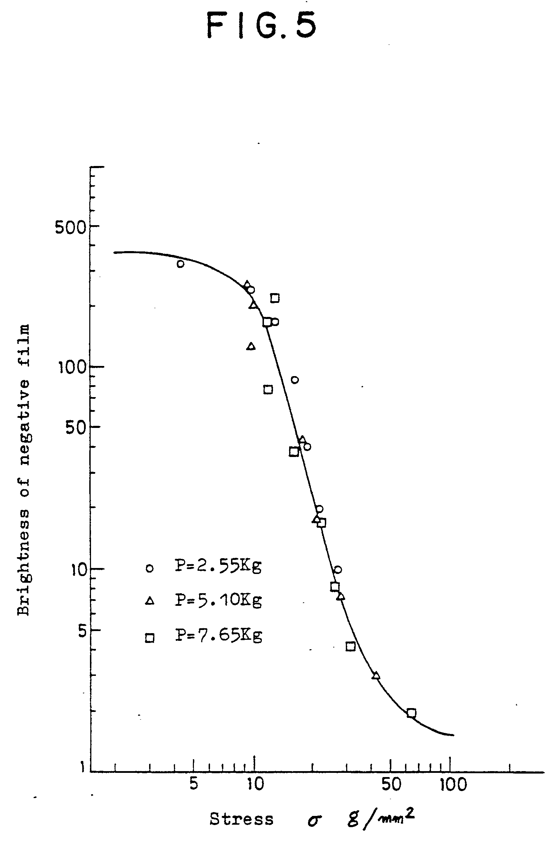

On the other hand, a calibration curve between the brightness of image and the stress value as shown in Fig. 5 was obtained by providing the synthesized picture by applying a concentrated load to the glass test piece by using the apparatus as shown in Fig. 4. The brightness is corresponding to the output voltage of the brightness distribution measuring apparatus.

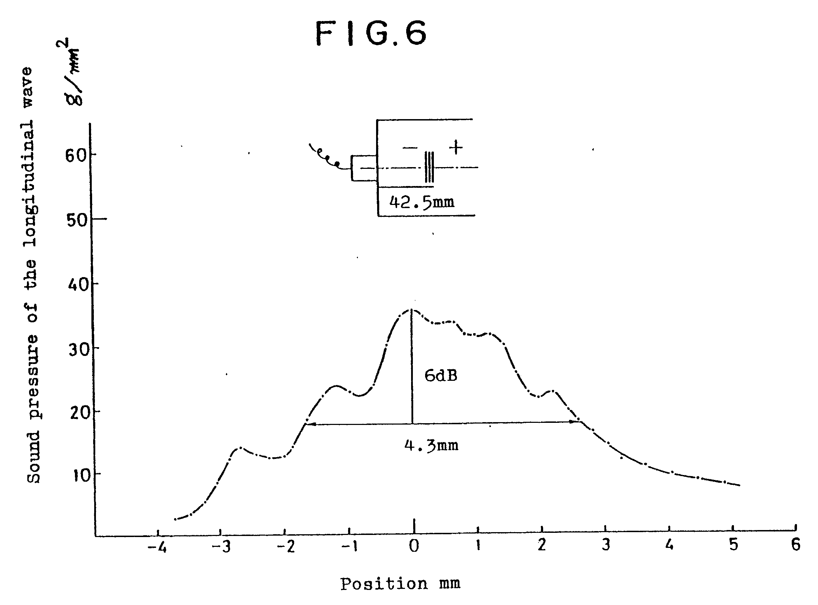

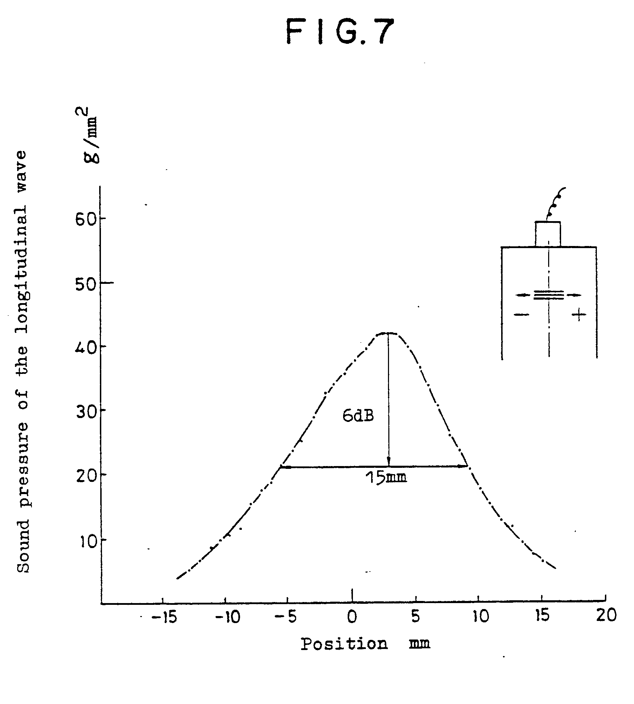

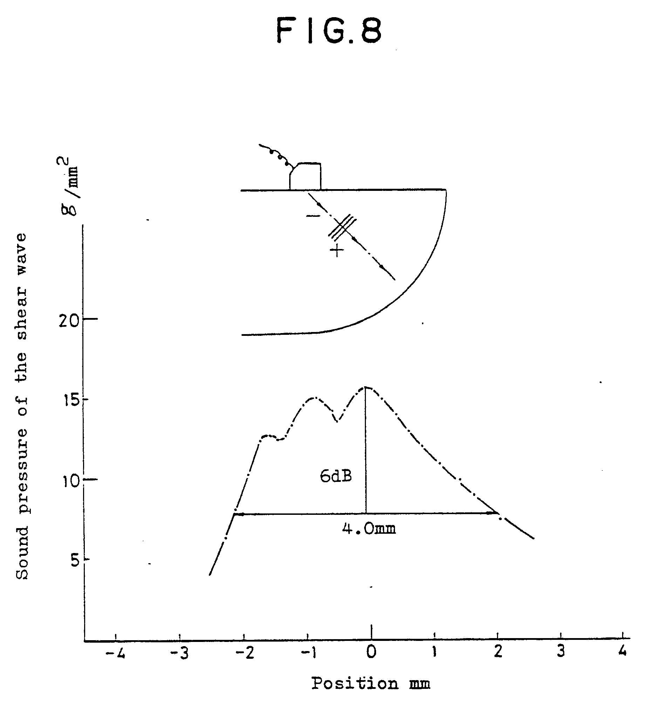

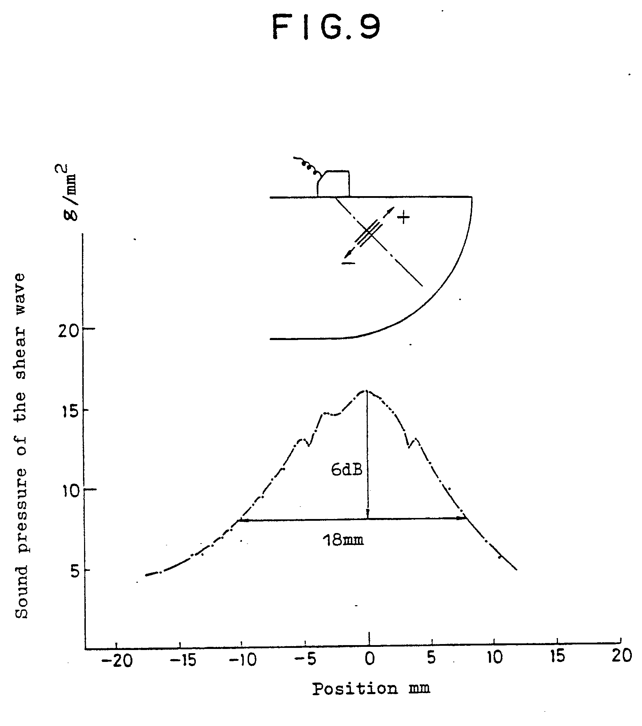

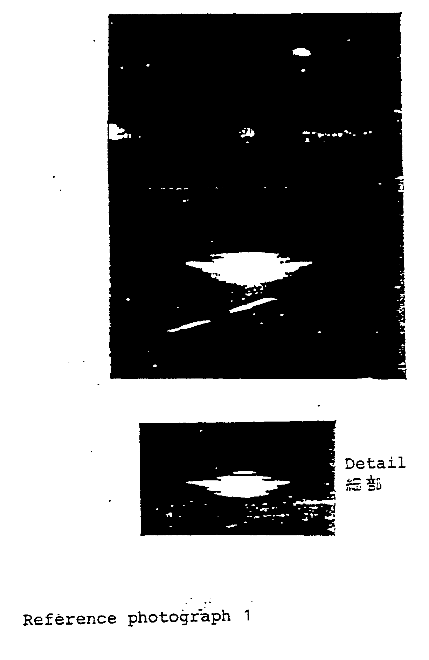

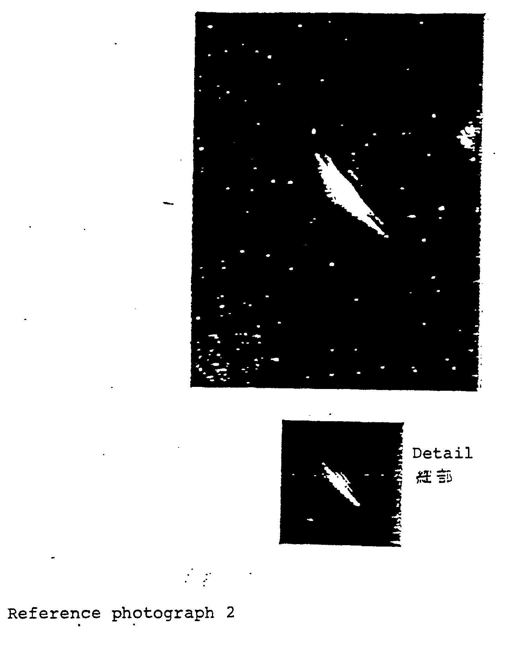

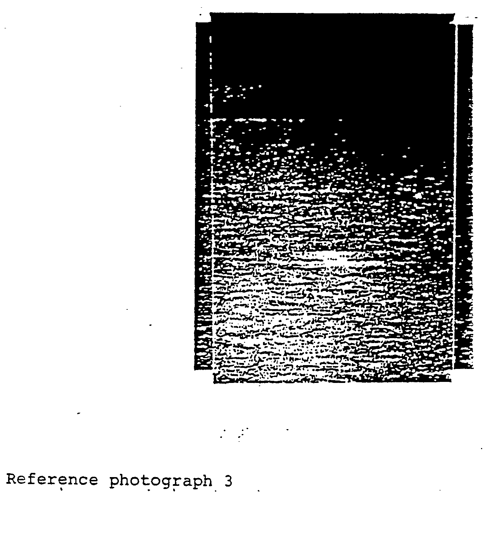

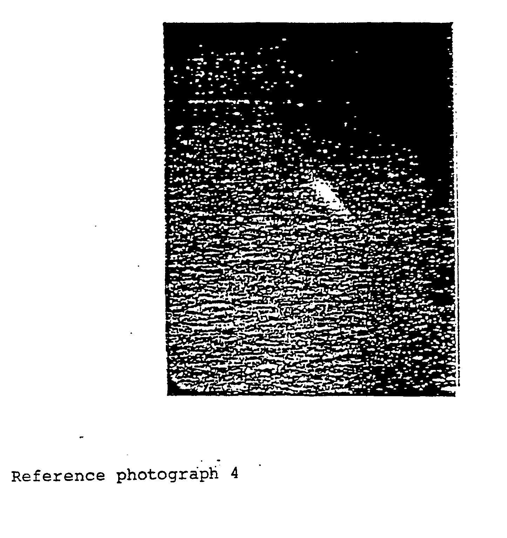

Referring to Figs. 6 to 9 sound pressure distributions are shown. The sound distribution of Figs. 6 to 9 are obtained in such a manner that the brightness distribution of the longitudinal and shear waves as shown in the reference photographs 1 and 2 respectively are measured on the basis of the calibration curve in Fig. 5, and the brightness distributions are converted to the sound pressure distributions. Fig. 6 shows an sound pressure distribution on the center line of the normal longitudinal wave probe; Fig. 7, and sound pressure distribution in the transversal direction; Fig. 8, an sound pressure distribution in the transmission direction of the angle shear wave probe; and Fig. 9, an sound pressure distribution in the transversal direction.

As is apparent from the reference photographs, according to the present invention, the sound pressure distribution of the pulse generated from the probe can be measured and the characteristics of the probe can be evaluated and authorized.

As mentioned before, the object of the present invention is to develop a method having higher sensitivity than the conventional method using the circular polarization of the photoelasticity. It has been known that the object of the present invention can be achieved by synthesizing two pictures, in which the direction of the principal axis is different by $45^\circ$, by the linear polariscope, as shown in the reference photographs 1 and 2. It is apparent that the visual images shown by the reference photographs 1 and 2 are very clear more than the conventional visual images shown by the reference photographs 3 and 4. According to the present invention, it has been possible to measure the sound pressure quantitatively.

Furthermore, from the visual images shown in reference photographs 1 and 2, there is recognized the pulse waveform emitted from the probe, the travelling direction, and existence of unnecessary pulse. From the sound pressure distribution on the waveform as shown in Figs. 6 to 9, it is possible to evaluate and authorize the characteristics of probe, such as the maximum value and its position of the sound pressure, the width of the pulse concerning a resolution (for example the width at the level of 6 db), and directivity characteristics.

The measurement of the brightness distribution is effected by enlarging the negative film and moving a phototransistor by using an X-Y stage, and then the sound pressure value is obtained. However, by using an image processing apparatus, the sequential process from the image synthesization to the evaluation is performed by using a computer thereby processing a speedy processing.

Referring to Table 1, advantages of the present method in comparison with the conventional method are shown.

Table 1 Comparison between the present method and the conventional method

| | | Method using a standard test piece | Method using an electro-dynamic sensor | Method using visual images | |
|---|---|---|---|---|---|
| | | | | Conventional method | Present method |
| Evaluation of the characteristics of probe | Pulse waveform | Difficult | Difficult | Partially possible | Possible |
| | Sound pressure distribution | Relative distribution | Relative distribution | Difficult | Possible |
| | Sensitivity of transmitting and receiving the pulse | Difficult | Difficult | Difficult | All is possible since the evaluation is effected on the basis of the pulse waveform and the sound pressure distribution. |
| | Resolution | Possible | Partially possible | Partially possible | |
| | Distance-amplitude characteristics | Possible | Possible | Difficult | |
| Development of new type probe | | May be of reference | May be of reference | May be of reference | It is possible to evaluate quantitatively. |
| Application to flaw detection | Selection of most suitable probe | Partially possible | Partially possible | Partially may be of reference | All is possible, if the model having the same formation as the object is provided. |
| | Determination of scanning pitch | Possible | Possible | Partially may be of reference | |
| | Arrangement of probes to the object having complex formation. | Difficult | Difficult | Possible | |
| | Evaluation of flaw detection results | Difficult | Difficult | Partially possible | |

## Claims

1. A method of measuring a sound pressure distribution in a solid body represented by a transparent test piece due to an ultrasonic probe by using the photoelastic method, wherein a polarizer and an analyzer are set crossed and are arranged at an arbitrary angle around the optical axis, and a stroboscope light source, the polarizer and the analyzer are used to visualize a supersonic wave within the transparent test piece,

**characterized** by the steps

1) the resulting visualized image obtained in this state is taken as a first picture;

2) while holding the polarizer and the analyzer crossed, both are rotated by an angle of 45°;

3) the resulting visualized image obtained in this state is taken as a second picture;

4) the first picture and second picture are synthesized to form a synthetic picture;

5) the sound pressure distribution can be found by evaluating the brightness distribution on the synthetic picture.

## Revendications

1. Procédé pour mesurer une répartition de pression acoustique dans un corps solide représenté par une éprouvette transparente, due à une sonde ultrasonique en utilisant le procédé de photoélasticité, dans lequel un polariseur et un analyseur sont disposés en croix sous un angle arbitraire autour de l'axe optique, et dans lequel on utilise une source de lumière stroboscopique, le polariseur et l'analyseur pour visualiser une onde supersonique à l'intérieur de l'éprouvette transparente, caractérisé par les stades suivants :

1) l'image visualisée résultante obtenue dans cet état est prise en tant que première image,

2) tout en maintenant croisés le polariseur et l'analyseur, on tourne les deux de 45°

3) l'image visualisée résultante obtenue dans cet état est prise en tant que deuxième image,

4) la première image et la deuxième image sont synthétisées pour former une image synthétique

5) on peut trouver la répartition de la pression acoustique en évaluant la répartition de la brillance sur l'image synthétique.

## Patentansprüche

1. Verfahren zum Messen der von einer Ultraschallsonde herrührenden Schalldruckverteilung in einem von einem transparenten Prüfteil repräsentierten Festkörper unter Verwendung des fotoelastischen Verfahrens, wobei ein Polarisator und ein Analysator gekreuzt und unter einem beliebigen Winkel um die optische Achse angeordnet werden und wobei eine Stromboskop-Lichtquelle, der Polarisator und der Analysator dazu verwendet werden, eine Überschallwelle in dem transparenten Prüfteil sichtbar zu machen, **gekennzeichnet** durch die Schritte:

1) das in diesem Zustand erhaltene resultierende sichtbare Bild wird als erstes Bild genommen;

2) unter Beibehaltung der gekreuzten Anordnung von Polarisator und Analysator werden beide um einen Winkel von 45° gedreht;

3) das in diesem Zustand erhaltene resultierende sichtbare Bild wird als zweites Bild genommen;

4) das erste Bild und das zweite Bild werden zur Bildung eines zusammengesetzten Bildes synthetisiert;

5) die Schalldruckverteilung kann durch Auswertung der Helligkeitsverteilung auf dem zusammengesetzten Bild ermittelt werden.

# FIG. 1

# FIG.2

First picture

Principal axis
of polarizer

90°

Pricipal axis
of analyzer

Second picture

Principal axis
of polarizer

45°

Pricipal axis
of analyzer

EP 0 222 346 B1

# FIG.3

Camera

Synthesized
picture

Measuring of a brightness
distribution of the synthesized
picture

Conversion to the
sound pressure value

Output of evaluation results of the waveform
and sound pressure distribution by the
ultrasonic probe

# FIG.4

Load P

Lever

$r_n$

Glass test
piece

Weight

$$\alpha = \frac{2P}{\pi d \cdot r_n}$$

# F I G.5

# FIG.6

Sound pressure of the longitudinal wave $g/mm^2$

6dB

4.3mm

42.5mm

Position mm

EP 0 222 346 B1

# F I G.7

# F I G.8

# F I G. 9

Detail
総部

Reference photograph 1

Detail
紐部

Reference photograph 2

Reference photograph 3

Reference photograph 4